# EUROPEAN PATENT APPLICATION

(11) **EP 4 474 672 A1**
(43) Date of publication of application: **11.12.2024**
(21) Application number: 22924762.2
(22) Date of filing: 02.02.2022
(51) Int. Cl.: F16F 9/12, F16F 9/14

(54) **ROTARY DAMPER**

(71) Applicant: SOMIC MANAGEMENT HOLDINGS INC., Sumida-ku, Tokyo 130-0004 (JP)
(72) Inventor: KOBAYASHI Daisuke, Hamamatsu-shi, Shizuoka 431-2103 (JP); OZAKI Keigo, Brewer, Maine 04412 (US)
(74) Representative: Ter Meer Steinmeister & Partner
(86) International application number: PCT/JP2022/004088
(87) International publication number: WO 2023/148849

(57) **Abstract**

The present invention provides a rotary damper that includes: a cylinder (10) that includes partition walls (13); a rotor (20) that includes a shaft part (21) facing the partition walls (13); grooves (15) that are formed in the partition walls (13); and elastic bodies (40) that are installed in the grooves (15) to seal gaps between the partition walls (13) and the shaft part (21), the groove (15) has a space (60) in which the elastic body (40) can be moved in a circumferential direction, and the space (60) includes a portion into which the elastic body (40) can be inserted without being compressed, and portions that contain the elastic body (40) compressed by a face (15a) of the groove (15) facing the shaft part (21).

## Description

### Technical Field

The present invention relates to a rotary damper.

### Background Art

Conventionally, there is known a rotary damper that includes a cylinder including partition walls, and a rotor including a shaft part facing the partition walls. However, the conventional rotary damper has a problem that oil flows out through gaps between the partition walls and the shaft part. The outflow of the oil through the gaps between the partition walls and the shaft part has been one of causes that lower characteristics of the rotary damper.

WO 2003/046405 A1 discloses a rotary damper that includes a cylinder that includes partition walls, a rotor that includes a shaft part facing the partition walls, vanes that protrude from the shaft part, oil passages that are formed in the vanes, and valves that change flow rates of oil passing through the oil passages in one direction according to a load. This rotary damper has characteristics that an operation time, that is, a time required for the rotor or the cylinder to rotate at a constant rotation angle hardly changes due to a change in load. However, there has been a problem that the oil flows out through the gaps between the partition walls and the shaft part, thereby a sufficient amount of oil for the valve to function is not supplied to the valve, and therefore the characteristics lower.

WO 2012/141242 A1 discloses a rotary damper that includes a cylinder that includes partition walls, a rotor that includes a shaft part facing the partition walls, vanes that protrude from the shaft part, oil passages that are formed in the vanes, and check valves that are provided to the oil passages. This rotary damper has characteristics that a braking force is generated only when the rotor is rotated in one direction. However, the oil flows out through the gaps between the partition walls and the shaft part, and therefore there is a problem that the braking force lowers.

### Citation List

### Patent Literature

Patent Literature 1: WO 2003/046405 A1
Patent Literature 2: WO 2012/141242 A1

### Summary of Invention

### Technical Problem

An object of the present invention is to prevent an outflow of oil through gaps between partition walls and a shaft part and make it easy to attach elastic bodies that seal the gaps between the partition walls and the shaft part.

### Solution to Problem

In order to solve the above problem, the present invention provides a following rotary damper.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, and the space includes a portion (hereinafter, referred to as an "insertion portion") into which the elastic body can be inserted without being compressed, and a portion (hereinafter, referred to as a "containing portion") that contains the elastic body compressed by a face of the groove facing the shaft part.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, and the space includes an insertion portion, and containing portions that are disposed on both sides of the insertion portion.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, the space includes
an insertion portion, and containing portions that are disposed on both sides of the insertion portion, and a face of the groove facing the shaft part is a curved surface.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, and the space includes an insertion portion, and a containing portion that is disposed on one side of the insertion portion.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, the space includes
an insertion portion, and a containing portion that is disposed on one side of the insertion portion, and
a face of the groove facing the shaft part is an inclined surface.

A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, the space includes
an insertion portion, and a containing portion that is disposed on one side of the insertion portion, and
the rotary damper further includes an oil passage that is formed in the partition wall to make an oil chamber adjacent to the partition wall, and the insertion portion communicate with each other. A rotary damper including: a cylinder that includes a partition wall; a rotor that includes a shaft part facing the partition wall; a groove that is formed in the partition wall; and an elastic body that is installed in the groove to seal a gap between the partition wall and the shaft part, in which the groove has a space in which the elastic body can be moved in a circumferential direction, the space includes
an insertion portion, and a containing portion that is disposed on one side of the insertion portion, a face of the groove facing the shaft part is an inclined surface, and the rotary damper further includes an oil passage that is formed in the partition wall to make an oil chamber adjacent to the partition wall, and the insertion portion communicate with each other.

### Advantageous Effects of Invention

According to the present invention described in above 1 to 7, the groove has the space in which the elastic body can be moved in the circumferential direction, and the space includes the containing portion, so that it is possible to prevent the oil from flowing out through the gap between the partition wall and the shaft part. Furthermore, the space includes the insertion portion, so that it is possible to make it easy to attach the elastic body.

According to the present invention described in above 2 and 3, the containing portions are disposed on the both sides of the insertion portion, so that it is possible to prevent not only an outflow of the oil flowing in one direction through the gap between the partition wall and the shaft part, but also an outflow of the oil flowing in an opposite direction.

According to the present invention described in above 3, the face of the groove facing the shaft part is the curved surface, so that it is possible to quickly produce a sealing effect with respect to the oil flowing in the one direction and the opposite direction through the gap between the partition wall and the shaft part.

According to the present invention described in above 4 to 7, the containing portion is disposed on the one side of the insertion portion, so that it is possible to prevent the outflow of the oil flowing in the one direction through the gap between the partition wall and the shaft part while it is possible to cause the oil flowing in the opposite direction to flow out.

According to the present invention described in above 5 and 7, the face of the groove facing the shaft part is the inclined surface, so that it is possible to quickly produce the sealing effect with respect to the oil flowing in the one direction through the gap between the partition wall and the shaft part.

The present invention described in above 6 and 7 includes the oil passage that is formed in the partition wall to make the oil chamber adjacent to the partition wall, and the insertion portion communicate with each other, so that it is possible to cause the oil to flow out to the oil chamber through the oil passage when the oil flows in the opposite direction through the gap between the partition wall and the shaft part.

### Brief Description of Drawings

Fig. 1 is a plan view of a rotary damper according to embodiment 1.
Fig. 2 is a cross-sectional view taken along a portion A-A in Fig. 1.
Fig. 3 is a cross-sectional view taken along a portion B-B in Fig. 1.
Fig. 4 is a cross-sectional view taken along a portion C-C in Fig. 2.
Fig. 5 is a partially enlarged view illustrating groove adopted in embodiment 1.
Fig. 6 is a partially enlarged view illustrating the groove adopted in embodiment 1.
Fig.7 a partially enlarged view illustrating an operation of an elastic body adopted in embodiment 1.
Fig.8 a partially enlarged view illustrating the operation of the elastic body of in embodiment 1.
Fig. 9 is a partially enlarged view illustrating a groove adopted in embodiment 2.
Fig. 10 is a partially enlarged view illustrating the groove adopted in embodiment 2.
Fig. 11 a partially enlarged view illustrating an operation of an elastic body adopted in embodiment 2.
Fig. 12 is a partially enlarged view illustrating a groove adopted in embodiment 3.
Fig. 13 is a partially enlarged view illustrating the groove adopted in embodiment 3.
Fig.14 a partially enlarged view illustrating an operation of an elastic body adopted in embodiment 3.

### Description of Embodiments

Hereinafter, embodiments of the present invention will be described with reference to the drawings.

### Embodiment 1

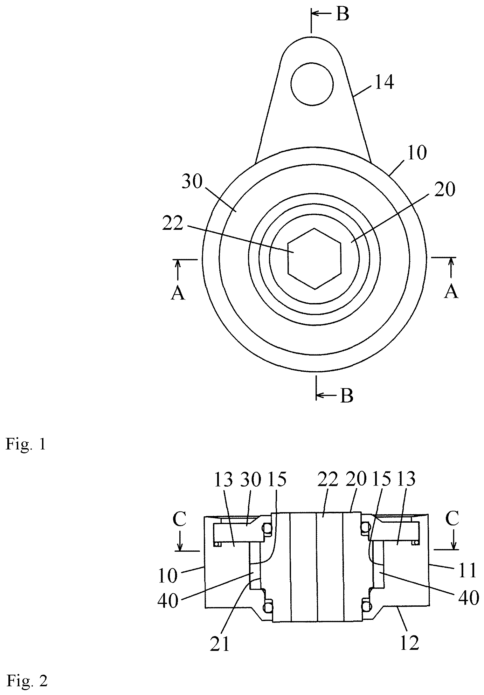

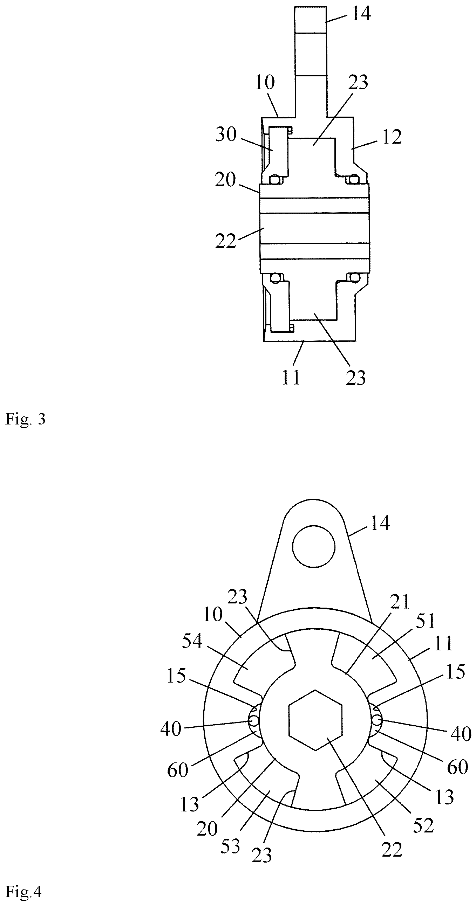

As illustrated in Fig. 1, a rotary damper according to embodiment 1 includes a cylinder 10 and a rotor 20. The cylinder 10 is a cylindrical part that contains oil inside. The rotor 20 is a part that rotates. In this regard, the rotor 20 may not rotate depending on cases. A braking action in a case where the cylinder 10 is fixed so as not to rotate and the rotor 20 is rotated in one direction, that is, the clockwise direction in Fig. 4, and a braking action in a case where the rotor 20 is fixed so as not to rotate and the cylinder 10 is rotated in an opposite direction, that is, the counterclockwise direction in Fig. 4 are the same.

As illustrated in Figs. 2, 3, and 4, the cylinder 10 includes a peripheral wall 11, an end wall 12 that closes one end of the peripheral wall 11, and partition walls 13 that protrude from the peripheral wall 11 toward the center. As illustrated in Figs. 1, 3, and 4, the cylinder 10 includes a flange 14 that protrudes from the peripheral wall 11. The flange 14 is coupled to an object that fixes the cylinder 10 so as not to rotate or an object that rotates the cylinder 10. As illustrated in Figs. 1, 2, and 3, the other end of the peripheral wall 11 is closed by a lid 30. The lid 30 is attached to the cylinder 10 by caulking an end part of the peripheral wall 11. As illustrated in Figs. 2 and 4, grooves 15 are formed in the distal end surfaces of the partition walls 13. The groove 15 is a seal groove, and, as illustrated in Figs. 2 and 4, an elastic body 40 that functions as a seal is installed in the groove 15. The elastic body 40 adopted in embodiment 1 is a columnar rubber.

As illustrated in Figs. 2 and 4, the rotor 20 includes a shaft part 21 that faces the partition walls 13. The rotor 20 is installed such that the shaft part 21 can rotate in the cylinder 10. As illustrated in Figs. 2 and 3, one end of the rotor 20 is inserted into a hole formed in the end wall 12, and the other end of the rotor 20 is inserted into a hole formed in the lid 30. As illustrated in Figs. 1, 2, 3, and 4, at the rotor 20, a hole 22 is formed into which an object that rotates the rotor 20 or an object that fixes the rotor 20 so as not to rotate is inserted. As illustrated in Figs. 3 and 4, the rotor 20 includes vanes 23 that protrude from the shaft part 21.

As illustrated in Fig. 4, four oil chambers partitioned by the partition walls 13 and the vanes 23, that is, a first oil chamber 51, a second oil chamber 52, a third oil chamber 53, and a fourth oil chamber 54 are formed in the cylinder 10. Oil is injected into each of the oil chambers 51 to 54.

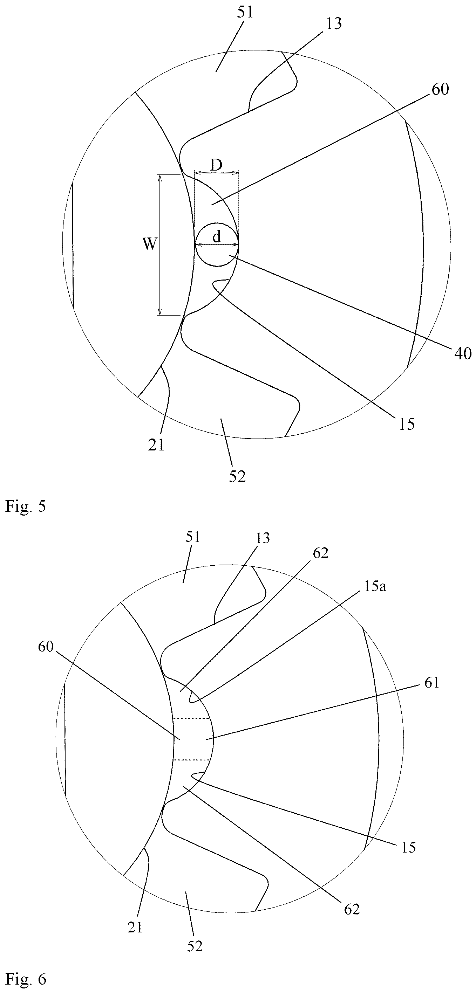

In the rotary damper according to embodiment 1, the groove 15 has a space 60 in which the elastic body 40 can be moved in a circumferential direction. That is, as illustrated in Fig. 5, the groove 15 forms the space 60 having a depth D and a width W longer than a diameter d of the elastic body 40 between the groove 15 and the shaft part 21. As illustrated in Fig. 6, this space 60 includes an insertion portion 61, and containing portions 62 that are disposed on both sides of the insertion portion 61. The insertion portion 61 is a portion in the space 60 into which the elastic body 40 can be inserted without being compressed. The containing portion 62 is a portion in the space 60 that contains the elastic body 40 compressed by a face 15a of the groove 15 facing the shaft part 21. As illustrated in Fig. 6, the face 15a of the groove 15 facing the shaft part 21 is a curved surface.

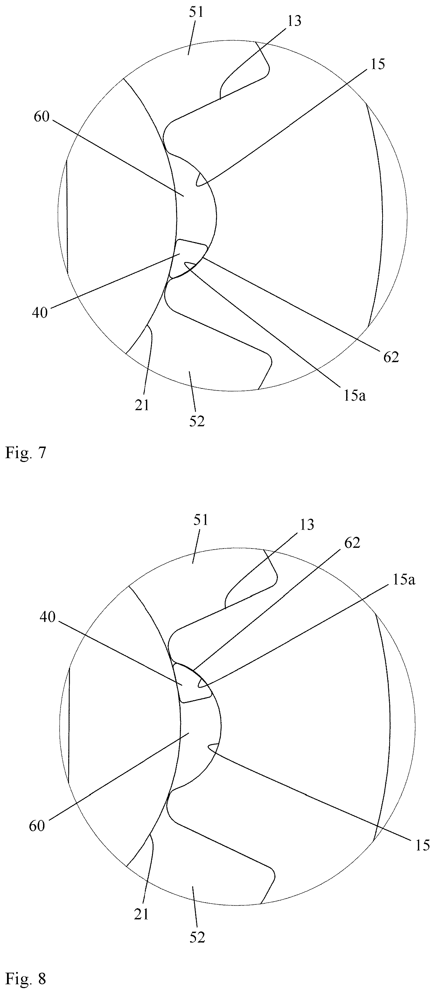

In the rotary damper according to embodiment 1, when the rotor 20 rotates in the one direction (the clockwise direction in Fig. 4) or the cylinder 10 rotates in the opposite direction (the counterclockwise direction in Fig. 4), oil in the first oil chamber 51 flows into the groove 15 through a gap between the partition wall 13 and the shaft part 21. Thus, the elastic body 40 moves to the containing portions 62 while being compressed by the face 15a of the groove 15 facing the shaft part 21, and comes into close contact with the shaft part 21 as illustrated in Fig. 7. As a result, the gap between the partition wall 13 and the shaft part 21 is sealed. Consequently, the rotary damper according to embodiment 1 can prevent an outflow of the oil flowing in the one direction through the gap between the partition walls 13 and the shaft part 21.

Furthermore, in the rotary damper according to embodiment 1, when the rotor 20 rotates in the opposite direction (the counterclockwise direction in Fig. 4) or the cylinder 10 rotates in the one direction (the clockwise direction in Fig. 4), the oil in the second oil chamber 52 flows into the groove 15 through the gap between the partition wall 13 and the shaft part 21. Thus, the elastic body 40 moves to the containing portions 62 while being compressed by the face 15a of the groove 15 facing the shaft part 21, and comes into close contact with the shaft part 21 as illustrated in Fig. 8. As a result, the gap between the partition wall 13 and the shaft part 21 is sealed. Consequently, the rotary damper according to embodiment 1 can also prevent the outflow of the oil flowing in the opposite direction through the gaps between the partition walls 13 and the shaft part 21.

In a case where the groove 15 formed in the distal end surface of the partition wall 13 has the depth or the width shorter than the diameter of the elastic body 40, it is necessary to install the elastic body 40 in the groove 15 while compressing the elastic body 40, and therefore it is difficult to attach the elastic body 40. However, the rotary damper according to embodiment 1 includes the insertion portions 61, so that it is possible to install the elastic bodies 40 in the grooves 15 without compressing the elastic bodies 40. Consequently, according to the rotary damper according to embodiment 1, it is easy to attach the elastic bodies 40. Furthermore, in the rotary damper according to embodiment 1, the containing portions 62 are disposed on both sides of the insertion portion 61, so that it is possible to prevent not only the outflow of the oil flowing in one direction through the gap between the partition wall 13 and the shaft part 21, but also the outflow of the oil flowing in the opposite direction. Furthermore, in the rotary damper according to embodiment 1, the face 15a of the groove 15 facing the shaft part 21 is the curved surface, so that it is possible to quickly produce a sealing effect with respect to the oil flowing in the one direction and the opposite direction through the gap between the partition wall 13 and the shaft part 21.

### Embodiment 2

The rotary damper according to embodiment 2 employs the same configuration as that of the rotary damper according to embodiment 1 except that grooves 15' are different from grooves 15 adopted in embodiment 1.

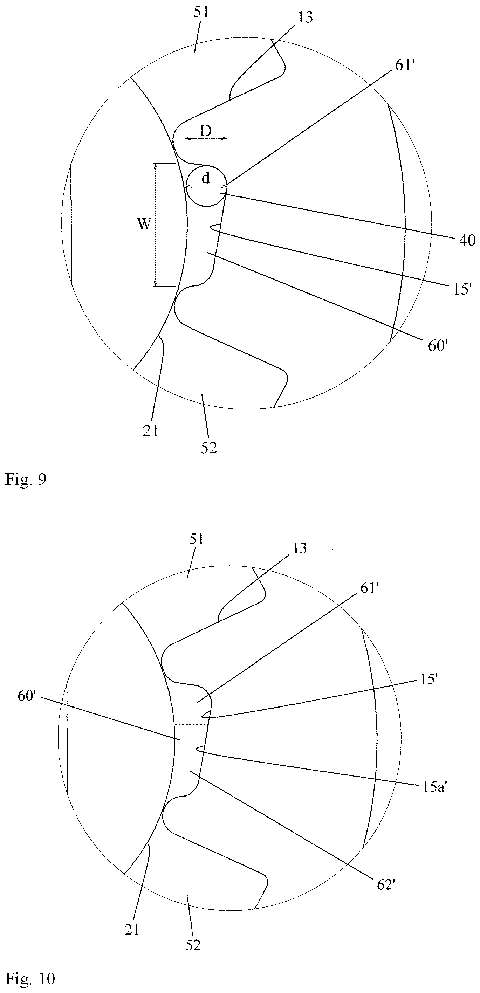

The groove 15' of the rotary damper according to embodiment 2 has a space 60' in which an elastic body 40 can be moved in a circumferential direction similarly to the groove 15 adopted in embodiment 1. That is, as illustrated in Fig. 9, the groove 15' forms the space 60' having a depth D and a width W longer than a diameter d of the elastic body 40 between the groove 15' and a shaft part 21. This space 60' includes an insertion portion 61' and a containing portion 62', yet a difference is that, while the containing portion 62' is disposed on one side of the insertion portion 61' as illustrated in Fig. 10, containing portions 62 are disposed on the both sides of an insertion portion 61 in embodiment 1. The insertion portion 61' is a portion in the space 60' into which the elastic body 40 can be inserted without being compressed. The containing portion 62' is a portion in the space 60' that contains the elastic body 40 compressed by a face 15a' of the groove 15' facing the shaft part 21. Furthermore, there is also a difference from embodiment 1 that, as illustrated in Fig. 10, the face 15a' of the groove 15' facing the shaft part 21 is an inclined surface.

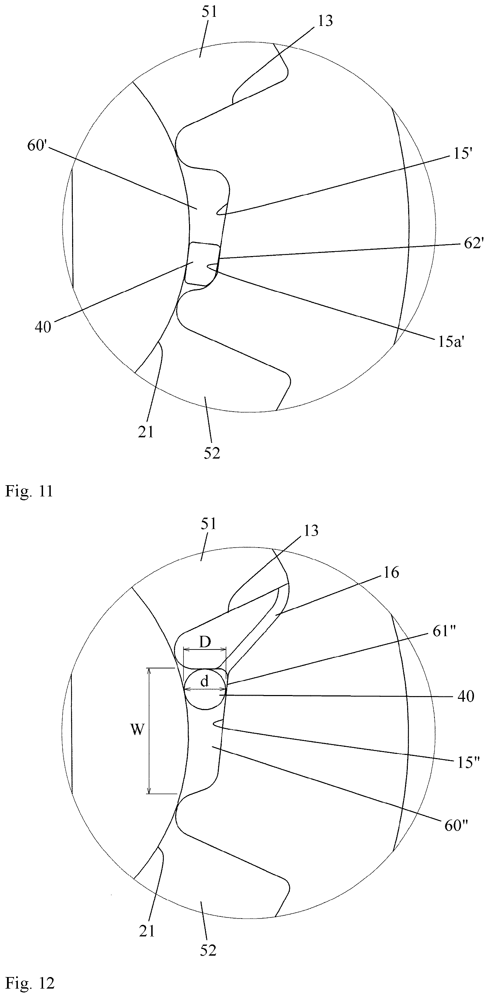

In the rotary damper according to embodiment 2, when a rotor 20 rotates in one direction or the cylinder 10 rotates in an opposite direction, oil in a first oil chamber 51 flows into the groove 15' through the gap between a partition wall 13 and the shaft part 21. Thus, the elastic body 40 moves to the containing portion 62' while being compressed by the face 15a' of the groove 15' facing the shaft part 21, and comes into close contact with the shaft part 21 as illustrated in Fig 11. As a result, the gap between the partition wall 13 and the shaft part 21 is sealed. Consequently, the rotary damper according to embodiment 2 can prevent an outflow of the oil flowing in the one direction through the gaps between the partition walls 13 and the shaft part 21.

On the other hand, when the rotor 20 rotates in the opposite direction or a cylinder 10 rotates in the one direction, and thereby the oil in a second oil chamber 52 flows into the groove 15' through the gap between the partition wall 13 and the shaft part 21, the elastic body 40 moves to the insertion portion 61' as illustrated in Fig. 9. At this time, the elastic body 40 is not compressed, and therefore does not come into close contact with the shaft part 21. Hence, the oil flowing in the opposite direction through the gap between the partition wall 13 and the shaft part 21 flows out to the first oil chamber 51.

The rotary damper according to embodiment 2 includes the insertion portions 61', so that the elastic bodies 40 can be installed in the grooves 15' without being compressed. Consequently, according to the rotary damper according to embodiment 2, it is easy to attach the elastic bodies 40. Furthermore, in the rotary damper according to embodiment 2, the containing portion 62' is disposed on one side of the insertion portion 61', so that it is possible to prevent an outflow of the oil flowing in the one direction through the gap between the partition wall 13 and the shaft part 21 while it is possible to cause the oil flowing in the opposite direction to flow out. Furthermore, in the rotary damper according to embodiment 2, the face 15a' of the groove 15' facing the shaft part 21 is the inclined surface, so that it is possible to quickly produce a sealing effect with respect to the oil flowing in the one direction through the gap between the partition wall 13 and the shaft part 21.

### Embodiment 3

The rotary damper according to embodiment 3 employs the same configuration as that of the rotary damper according to embodiment 2 except that the rotary damper includes oil passages 16.

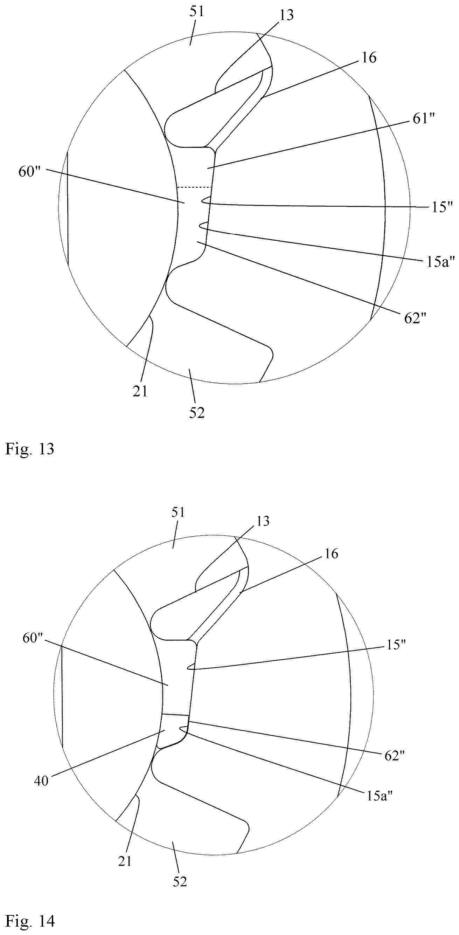

A groove 15" of the rotary damper according to embodiment 3 has a space 60" in which an elastic body 40 can be moved in a circumferential direction similarly to grooves 15 and 15' adopted in embodiments 1 and 2. That is, as illustrated in Fig. 12, the groove 15" forms the space 60" having a depth D and a width W longer than a diameter d of the elastic body 40 between the groove 15" and a shaft part 21. This space 60" includes an insertion portion 61" and a containing portion 62", yet is the same as embodiment 2 in that the containing portion 62" is disposed on one side of the insertion portion 61" as illustrated in Fig. 13. The insertion portion 61" is a portion in the space 60" into which the elastic body 40 can be inserted without being compressed. The containing portion 62" is a portion in the space 60" that contains the elastic body 40 compressed by the face 15a" of the groove 15" facing the shaft part 21. Furthermore, what is the same as that in embodiment 2 is that, as illustrated in Fig. 13, a face 15a" of the groove 15" facing the shaft part 21 is also an inclined surface.

Unlike the rotary damper according to embodiment 2, the rotary damper according to embodiment 3 includes the oil passages 16. As illustrated in Fig. 13, the oil passage 16 is formed in a partition wall 13 to make the oil chamber (first oil chamber 51) adjacent to the partition wall 13, and the insertion portion 61" communicate with each other.

In the rotary damper according to embodiment 3, when the rotor 20 rotates in the one direction or the cylinder 10 rotates in the opposite direction, the oil in the first oil chamber 51 flows into the groove 15" through the gap between the partition wall 13 and the shaft part 21. Consequently, the elastic body 40 moves to the containing portion 62" while being compressed by the face 15a" of the groove 15" facing the shaft part 21, and comes into close contact with the shaft part 21 as illustrated in Fig. 14. As a result, the gap between the partition wall 13 and the shaft part 21 is sealed. Consequently, the rotary damper according to embodiment 3 can prevent an outflow of the oil flowing in the one direction through the gap between the partition walls 13 and the shaft part 21.

On the other hand, when the rotor 20 rotates in the opposite direction or the cylinder 10 rotates in the one direction, and thereby the oil in a second oil chamber 52 flows into the groove 15" through the gap between the partition wall 13 and the shaft part 21, the elastic body 40 moves to the insertion portion 61" as illustrated in Fig. 12. At this time, the elastic body 40 is not compressed, and therefore does not come into close contact with the shaft part 21. Consequently, the oil flowing in the opposite direction through the gap between the partition wall 13 and the shaft part 21 flows out to the first oil chamber 51 through the gap between the partition wall 13 and the shaft part 21, and the oil passage 16.

The rotary damper according to embodiment 3 includes the insertion portions 61", so that it is possible to install the elastic bodies 40 in the grooves 15 without compressing the elastic bodies 40. Consequently, according to the rotary damper according to embodiment 3, it is easy to attach the elastic bodies 40. Furthermore, in the rotary damper according to embodiment 3, the containing portion 62" is disposed on one side of the insertion portion 61", so that it is possible to prevent an outflow of the oil flowing in the one direction through the gap between the partition wall 13 and the shaft part 21 while it is possible to cause the oil flowing in the opposite direction to flow out. Furthermore, in the rotary damper according to embodiment 3, the face 15a" of the groove 15" facing the shaft part 21 is the inclined surface, so that it is possible to quickly produce a sealing effect with respect to the oil flowing in the one direction through the gap between the partition wall 13 and the shaft part 21. Furthermore, the rotary damper according to embodiment 3 can cause the oil to flow out to the first oil chamber 51 through the oil passage 16 when the oil flows in the opposite direction through the gap between the partition wall 13 and the shaft part 21, so that it is possible to reduce resistance of the oil acting on vanes 23 or the partition walls 13.

By applying a valve described in WO 2003/046405 A1 to the rotary dampers according to embodiment 1 to embodiment 3, it is possible to provide a rotary damper that further includes oil passages formed in vanes and a valve that changes a flow rate of oil passing in one direction through the oil passages according to a load. The "oil passing in the one direction through the oil passages" means oil that moves from the first oil chamber to the fourth oil chamber via the oil passages, and oil that moves from the third oil chamber to the second oil chamber via the oil passages. The "flow rate of the oil" means the amount of oil passing through the oil passages within a unit time. The "load" means a force that rotates the rotor in the one direction, that is, the clockwise direction in Fig. 4, or a force that rotates the cylinder in the opposite direction, that is, the counterclockwise direction in Fig. 4. The "change" means that the flow rate of the oil is reduced as the load increases.

The rotary dampers according to embodiment 1 to embodiment 3 can prevent the oil from flowing out through the gaps between the partition walls and the shaft part, so that it is possible to sufficiently supply the oil to the valve. Consequently, it is possible to reduce a range of change in an operation time (i.e., a time required for the rotor to rotate at a constant rotation angle in the one direction or for the cylinder to rotate at a constant rotation angle in the opposite direction) caused by change in the load compared to the conventional technique.

By applying the valve described in WO 2012/141242 A1 to the rotary dampers according to embodiment 1 to embodiment 3, it is possible to provide a rotary damper that further includes oil passages formed in vanes and check valves provided in the oil passages.

The rotary dampers according to embodiment 1 to embodiment 3 can prevent the oil from flowing out through the gaps between the partition walls and the shaft part, so that it is possible to increase a braking force produced when the check valves close the oil passages formed in the vanes compared to the conventional technique. Furthermore, the rotary damper according to embodiment 3 includes the oil passages formed in the partition walls, so that it is possible to reduce resistance of the oil acting on the vanes or the partition walls when the check valves open the oil passages formed in the vanes compared to the conventional technique.

**Reference Signs List**

| | |
|---|---|
| 10 Cylinder | 60, 60', 60" Space |
| 11 Peripheral wall | 61, 61', 61" Insertion portion |
| 12 End wall | 62, 62', 62" Containing portion |
| 13 Partition wall | |
| 14 Flange | |
| 15, 15', 15" Groove | |
| 15a, 15a', 15a" Face of groove facing shaft part | |
| 16 Oil passage | |
| 20 Rotor | |
| 21 Shaft part | |
| 22 Hole | |
| 23 Vane | |
| 30 Lid | |
| 40 Elastic body | |
| 51 First oil chamber | |
| 52 Second oil chamber | |
| 53 Third oil chamber | |
| 54 Fourth oil chamber | |

## Claims

1. A rotary damper comprising:
a cylinder that includes a partition wall;
a rotor that includes a shaft part facing the partition wall;
a groove that is formed in the partition wall; and
an elastic body that is installed in the groove to seal a gap between the partition wall and the shaft part,
wherein the groove has a space in which the elastic body can be moved in a circumferential direction, and
wherein the space includes
a portion (hereinafter, referred to as an "insertion portion") into which the elastic body can be inserted without being compressed, and
a portion (hereinafter, referred to as a "containing portion") that contains the elastic body compressed by a face of the groove facing the shaft part.

2. The rotary damper according to claim 1, wherein the containing portions are disposed on both sides of the insertion portion.

3. The rotary damper according to claim 1, wherein the containing portions are disposed on both sides of the insertion portion, and wherein the face of the groove facing the shaft part is a curved surface.

4. The rotary damper according to claim 1, wherein the containing portion is disposed on one side of the insertion portion.

5. The rotary damper according to claim 1, wherein the containing portion is disposed on one side of the insertion portion, and wherein the face of the groove facing the shaft part is an inclined surface.

6. The rotary damper according to claim 1 further comprising an oil passage that is formed in the partition wall to make an oil chamber adjacent to the partition wall, and the insertion portion communicate with each other, wherein the containing portion is disposed on one side of the insertion portion.

7. The rotary damper according to claim 1 further comprising an oil passage that is formed in the partition wall to make an oil chamber adjacent to the partition wall, and the insertion portion communicate with each other, wherein the containing portion is disposed on one side of the insertion portion, and wherein the face of the groove facing the shaft part is an inclined surface.
